# EUROPEAN PATENT APPLICATION

(11) **EP 2 100 729 A1**
(43) Date of publication of application: **16.09.2009**
(21) Application number: 08405074.9
(22) Date of filing: 13.03.2008
(51) Int. Cl.: B32B 27/00, B65D 65/40, B65D 81/34

(54) **Multilayer film for packaging for thermal treatment**

(71) Applicant: Alcan Technology & Management Ltd., 8212 Neuhausen am Rheinfall (CH)
(72) Inventor: Bertolino, Noemi, 37138 Verona (IT); Bevilacqua, Markus, 8213 Neunkirch (CH); Della Torre, Andrea, 21052 Busto Arsizio (VA) (IT); Menard, Rico, 9533 Kirchberg SG (CH)

(57) **Abstract**

A multilayer film (10) for the production of flexible packaging for thermal treatment has a plastic layer as outer layer (13) and a sealable layer as inner layer (19), and middle layers (14-18). The outer layer (13), the inner layer (19) and the middle layers (14-18) are coextruded to form a both direction stretched film, and the multilayer film (10) has a maximum degree of dimensional change of 2% at most when exposed to temperature.

## Description

The invention relates to a multilayer film for the production of flexible packaging intended for undergoing preservation treatment, i.e. heat treatment as retort or pasteurization, with a biaxially oriented plastic layer as outer layer and a sealable layer as inner layer, and optionally at least one middle layer. The invention also relates to a process suitable for manufacturing the multilayer film.

In the production of flexible packaging intended for undergoing preservation treatment, e.g. for pet food, convenience food, medicinal nutrient solutions, enteral nutrition, fish, liquids, fruit juices, etc., normally laminates with three or four layers are used. To achieve specific properties the individual layers are mostly bonded or laminated by adhesives. Such laminated films can exhibit different properties accordingly to the final application: stand up pouches, flat pouches or film lid are the most important ones. According to the application such requirements are:
- good barrier properties against water vapour, oxygen and other gases, as well as aromas
- low initial tear strength for easy opening; controlled straight easy tearing in machine direction (MD) or transverse direction (TD), depending on application
- stiffness for good machinability and, in case of pouches, self standing behaviour
- thermal sealability of the inner side (sealing layer)
- peelability of the sealing layer in case of lid applications
- thermal resistance and dimension stability to avoid deformation of the film during heat treatments
- good printability of the outer side, high or low gloss appearance, depending on application
- high puncture resistance to avoid pinholes by sharp-edged particles
- limited curl
- flex crack resistance (barrier stability after flexing the packaging)

Known films for the production of flexible packaging intended for undergoing preservation treatment, i.e. heat treatment as retort or pasteurization, are normally laminates with three or four layers, each layer effecting a specific property of the laminate. Layers of such laminates are normally laminated by using an adhesive and/or extrusion-lamination process, respectively. A biaxially oriented PET film forming the outer layer is used as a printing support, providing a high-gloss surface and good thermal resistance. Another oriented or unoriented film, e.g. PET or OPA, can be arranged in the middle as a barrier layer support or a layer for improving mechanical properties, such as e.g. impact strength or improved puncture resistance. Frequently, an aluminium foil is used inside the laminate as barrier layer against water vapour, oxygen or aroma loss. A vacuum coated PET or OPA layer can be used as barrier layer in case film transparency would be required. The inner layer generally consists of an unoriented, mono- or coextruded heat sealable film manufactured e.g. in the blow or cast extrusion process. For heat treatment application, PP or PE or a combination of both are frequently used as sealing layers. In the production process via adhesive lamination the individual films are connected to a laminate using solvent-containing or solvent-free two-component adhesives, often in two or more processing steps. This process has several disadvantages: the adhesive lamination process is not harmless due to solvent wastage and solvent recycling both from an economical and ecological view. Other risk factors are related to the adhesive chemistry and specifically to its curing process: in case curing is not performed completely, final film performances could be affected, together with packaging functionalities. Furthermore curing is prolonging the production lead time. In case of aromatic adhesive, a not complete curing process will increase the risk to have primary aromatic amines which can migrate into the packaged good due to adhesive which has not fully reacted.

Other migrating substances from the adhesive system could also lead to undesired off flavour of the packaged good. Therefore, a process which does not include reactive chemistry would be desirable. A partial solution of this problem is the production process via extrusion lamination. Here, the adhesive function is taken over by a polymer melt applied between the individual films, i.e. - depending on the requirements - acidic, anhydrous acidic or acrylic functionalized copolymers. In addition, the sealing layer may be applied to the inner side of the laminate as an extruded film by extrusion coating. In case of higher packaging performances are required (i.e. high retort conditions), so-called solvent-containing primers are necessary as tie layers, which complicate the process in view of the logistics of the raw materials management. A substantial disadvantage compared to the adhesive lamination is related to the laminate performances reachable through extrusion coating process: a significant limitation of the functionality (i.e. bond strength between layers) could happen for high retort application, i.e. at least 135°C.

The finished pack properties, such as the feel of the surface or haptics, form stability, strength etc., are achieved by a corresponding combination of the layers regarding arrangement and thickness. The variation range in the domain of traditionally oriented films is limited e.g. in regard to available thickness and variety. Therefore, e.g. biaxially oriented PET films with a thickness of less than 12 µm can not be produced economically by using conventional processes. This leads to solutions which function from a technical point of view, but regarding the corresponding pack properties, such as thermally resistant outer layer, sealability etc., the necessary material consumption is un-proportionally high. Therefore, in order to achieve the desired finished pack properties required for retort or pasteurization applications, suitable laminates which could be produced in a single process step with easy adjustable layer structure both in sequence and thickness are desirable.

It is known that biaxially stretched films can be produced via blown film extrusion by forming two or three bubbles. The process is called "double bubble (2B)" and "triple bubble (3B)" process, respectively. The blown film extrusion process with three bubbles, i.e. the "triple bubble process", as explained in the following, is herein also named "3B process" and films produced with the 3B process are called "3B films".

In the 3B process, a polymer mass is extruded through a ring-shaped nozzle or circular extrusion die forming a thick tube in the form of a monolayer or multilayer film, calibrated to an exact diameter after leaving the nozzle and thereafter quenched.

Subsequently, the tube is heated to a selected stretching temperature and in a further step inflated with air or another suitable gas between two pairs of nip rolls to enlarge the diameter of the bubble, thereby forming a second bubble and being stretched in transverse direction (TD). The stretching in longitudinal or machine direction (MD) is carried out by adjusting a different rotation speed of the nip rolls, thereby limiting the length of the second bubble in its longitudinal direction. The tube expanded to a bubble is in this way transported with a higher speed compared to the extrusion speed so that its orientation is maintained in transverse and machine direction, respectively.

The stretching process, applied on the film during the first two bubble steps, introduces some mechanical stress in the film. Consequence is the tendency of the film to shrink back, close to its initial dimension, as soon as heated to temperatures similar to the temperatures applied during the stretching process in the second bubble.

To control the mechanical tension introduced in the film by the biaxial orientation and the following rapid quench, the film is expanded to a third bubble and fixed in the inflated state, thereby maintaining a controlled temperature and a controlled inner pressure of the bubble. This heat treatment of the third bubble contributes to the flatness especially of multilayer films, thereby maintaining high stability and good mechanical strength obtained by biaxial orientation. An additional advantage of the third bubble process is to control the film residual mechanical stress and, consequently, the shrinking properties of the final package if heated afterward.

Main application for 2B and 3B webs are shrink films for vacuum skin packaging. Shrink behaviours are targeted in order to allow minimal headspace in packaging of foodstuffs.

From EP 1 410 902 A1, WO 2004/080805 A2, WO 01/03922 A1 and WO 2004/110755 A1 multilayer films produced by the 2B and 3B process are known as so called shrink films for barrier packaging of foodstuffs, the film during the shrinking process snuggling closely to the goods to be packed without forming air containing microcavities. Particularly for packaging large pieces of meat including bones, a tube continuously manufactured using the 2B or 3B process is divided into individual tube sections. Each tube section is first closed at one of its tube openings by heat sealing. The pouch produced in this way and still being open on one side is closed after filling of the goods to be packed by a second heat sealing and thereafter shrinked by applying heat until the pouch film fully snuggles the filling. The degree of shrinking of the multilayer films is typically between 20 and 60 %.

Due to the heavy shrinking of 3B films by exposing to high temperature, until today the use of these films in packaging was limited to the aforementioned use of the shrinking process for the packaging of products where a form-fit wrapping is desired.

The object of the present invention is to provide a multilayer film of the kind described at the beginning which can be manufactured without the disadvantages of the prior art processes.

That objective is achieved by way of the invention in that
(a) the outer layer, the inner layer and, if present, the middle layer/s are coextruded to form a biaxially oriented 3B film, and the multilayer film has a maximum degree of shrinking of 2% at most when exposed to retort or pasteurization conditions, or
(b) the inner layer and the middle layer/s are coextruded to form a biaxially oriented 3B film, and a biaxially oriented plastic film is adhesively bonded to the 3B film, and the corresponding laminate has a maximum degree of shrinking of 2% at most when exposed to retort or pasteurization conditions.

A process suitable for manufacturing the multilayer film is characterized in that
(a) the outer layer, the inner layer and, if present, the middle layer/s are coextruded to form a biaxially oriented triple bubble (3B) film, and time and temperature in the third bubble are selected to achieve a maximum degree of shrinking of the 3B film of 2% at most when the multilayer 3B film is exposed to retort or pasteurization conditions, or
(b) the inner layer and the middle layer/s are coextruded to form a biaxially oriented triple bubble (3B) film, and time and temperature in the third bubble are selected to achieve a maximum degree of shrinking of the 3B film of 2% at most when exposed to retort or pasteurization conditions, and a biaxially oriented plastic film is adhesively bonded to the 3B film.

The setting and adjustment of time and temperature conditions in the third bubble to achieve the required low degree of shrinking of the 3B film can be determined by a person skilled in the art.

A practically negligible shrinking is intended. Preferably, the admissible maximum degree of shrinking of the 3B films is of 2% at most, preferably 1% at most, when exposed to a temperature of up to 140 °C at a relative humidity of 100% for a period of at least 10 minutes, or to a temperature of up to 100 °C at a relative humidity of 100% for a period of at least 30 minutes.

Since the definition of retort and pasteurization conditions might be differently interpreted in different regions or markets, we define it as following:
Pasteurization conditions: 70 to 100 °C at 100% relative humidity for at least 30 min.
Retort conditions: 100 to 140 °C at 100% relative humidity for at least 10 min.
Depending on the application and also on the volume of the heat treated package, the required minimal time for these treatments, as mentioned above, could also be different from 30 or 10 min., respectively.

The 3B films used according to the present invention are thermally stabilized and fixed, respectively. Therewith it is assured that the films will not shrink or curl during additional processing steps such as e.g. manufacturing pouches by sealing various film webs or under retort or pasteurization conditions.

With the 3B coextrusion process the stretching or deformation of the material in the second bubble results in films that behave isotropic over the whole surface area so that practically the whole film production can be processed to packaging.

To achieve anisotropic behaviour, i.g. to allow easy tear in machine or transverse direction, the stretching conditions can be set accordingly in the second bubble.

The coextrusion via the 3B process of all layers necessary for the manufacture of flexible packaging intended for undergoing preservation treatment (i.e. heat treatment as retort or pasteurization) in one process operation leads to saving one or more process steps and therefore also to reduced costs in comparison with conventional production processes.

A significant advantage of the 3B films according to the present invention in comparison to conventionally manufactured films and laminates, respectively, is, among others, the following. Due to the fact that using the 3B coextrusion process, films with biaxially oriented layers of substantially lower thicknesses can be produced, which leads to substantial material savings. Using a 3B process, films with a biaxially oriented PET layer having a thickness of e.g. 2 to 12 µm are possible. On the other hand, thick sealing layers, which could not be applied economically to conventionally manufactured biaxially oriented films by lacquering, are possible.

Another advantage is the possibility of dyeing an inner layer of the film, thus preventing contamination of the sealing layer with dye when winding the film. The same way the outer layer of the film may be whitened to have a white background for later printing the outer side of the film.

Yet another advantage of the biaxially orientation of the multilayer film according to the present invention is the increase in stiffness, E-modulus and other mechanical properties of such a film, which gives the opportunity for down gauging.

Still another advantage of the multilayer films manufactured according to the present invention is that the functionalities of high puncture resistance and good barrier properties can be created in one single process step.

Further advantages are higher operational safety, better environmental conditions and reduced process costs, by avoiding reactive adhesives and solvents during the production process. Still another advantage of the multilayer 3B films manufactured according to the present invention is the omission of the curing times for adhesively bonded laminates which in turn leads to time and cost savings.

After the third bubble, the 3B film produced with the 3B process is layed flat, slit at the edges and wound in rolls. For an additional lacquering, printing, over lacquering, vacuum coating and/or for carrying out other additional processing steps in order to achieve technological and optical properties, the 3B film manufactured with the 3B process can be slit into a desired width in order to carry out the further processing steps, wound, supplied to the further processing steps and subsequently processed directly into retort packaging.

Since good barrier properties are essential for retort packaging and since it is not possible to incorporate an aluminium layer into the packaging film according to the present invention, the multilayer film manufactured via the 3B process has to be provided with a coextruded inner barrier layer, as e.g. EVOH or PVDC layers. Alternatively, in an additional process step, this can take place by vacuum deposition of metals and or organic or inorganic oxides. The 3B film can be metallised preferably with aluminium or coated with stainless steel or another metal, but also coated with ceramics, preferably with silicon oxide or aluminium oxide.

Compared to conventional processes for the manufacture of multilayer films for flexible packaging intended for undergoing preservation treatment (i.e. heat treatment as retort or pasteurization) via adhesive lamination, the multilayer film according to the present invention manufactured by the 3B process offers the following advantages:
- less material usage, thus increased sustainability
- less processing steps, thus lower actual costs
- no need for recycling solvents
- omission of curing times, hence shortening the production process
- omission of primary aromatic amines in the production process
- greater standardisation of the production process, hence advantages in logistics, reduced production documentation, less work with lab analysis
- less curl
- no risk of layer delamination due to poor adhesive distribution
- increased mechanical stiffness
- good film flatness, for superior printability with standard printing technologies and vacuum coating

The 3B multilayer film according to the present invention used in the manufacture of flexible packaging intended for undergoing preservation treatment, e.g. for pet food, convenience food, medicinal nutrient solutions, enteral nutrition, fish, liquids, fruit juices, etc., has preferably one of the following layer configurations:
PET : tie : PA : EVOH : PA : time : sealing layer
PET : tie : PP : time : PA : tie : sealing layer

Such 3B films can be coated on the PET side with silicon oxide, aluminium oxide, other ceramic materials or metals, provided with an organic layer, printed and over lacquered.

For special applications, also covered by the present invention, the film structure could also be a laminate between a biaxially oriented film, as e.g. PET or OPA, and a 3B film; one of the two films could also be vacuum coated with silicon oxide, aluminium oxide, other ceramic materials or metals, or coated with organic layers in order to bring gas and humidity barrier to the final laminate. As example, the following configurations are considered:
PET/barrier/ink/adhesive/3B PP:PP:t:PA:t:PP:sealing layer PET/ink/adhhesive/3B PP:PP:t:EVOH:t:PP:sealing layer
where t is a tie layer

The adhesive is a two-component, solvent based or solvent-free adhesive system.

The tie layers comprise e.g. a material on the basis of maleic acid anhydride (MAH), acrylate or carbonic acids.

Due to the PA layers in the 3B film and the biaxially orienting process, the corresponding structures have excellent tear and puncture resistance.

In addition, the biaxially orienting process improves the EVOH oxygen barrier both in dry and humid environments, i.e. the EVOH barrier layer of a 3B film according to the present invention shows improved barrier properties against oxygen during and just after retort process (reduced retort shock).

The sealing layer preferably contains a material selected of the group consisting of polyolefines (PO), particularly polyethylene (PE) or polypropylene (PP), polyamide (PA), polyesters and copolymers thereof, as well as ionomeres (ION), ethylene vinylacetate copolymer (EVA), ethylene butyl acrylate (EBA), ethylene methyl acrylate (EMA), and blends of the aforementioned materials. For retort applications usually PP is used as a sealing layer, whereas for pasteurization mainly PE or blends as mentioned above are used.

The 3B film can be printed and/or over lacquered with a thermo-protective lacquer.

Further advantages, features and details of the invention are revealed in the following description of preferred exemplary embodiments and with the aid of the drawing which shows schematically in
- Fig. 1: the layer composition of a first multilayer film for the production of retort packaging manufactured via the 3B process according to the present invention;
- Fig. 2: the layer composition of a second multilayer film for the production of retort packaging manufactured via the 3B process according to the present invention;
- Fig. 3: the layer composition of a third multilayer film for the production of retort packaging comprising a 3B film manufactured according to the present invention;
- Fig. 4: the layer composition of a fourth multilayer film for the production of retort packaging comprising a 3B film manufactured according to the present invention.

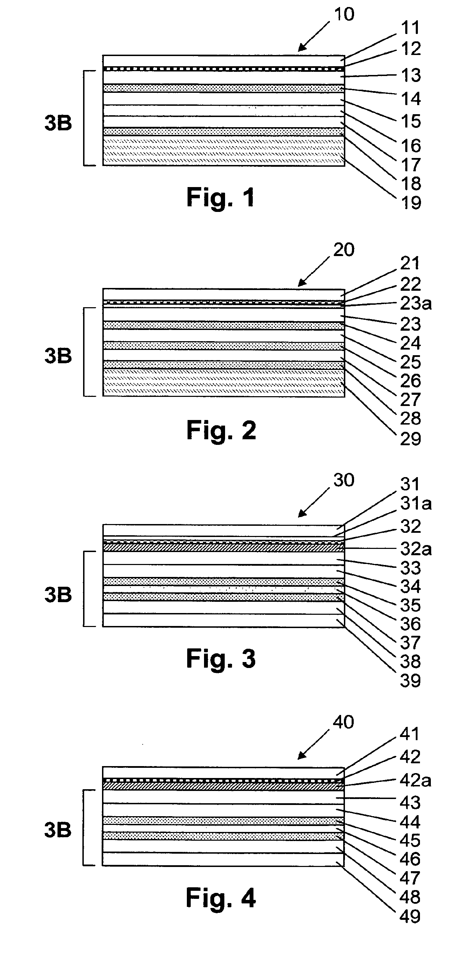

A first multilayer film 10 manufactured according to the present invention shows in Fig. 1 the following layer configuration:
- 11: thermal protective lacquer layer
- 12: ink printing
- 13: PET layer
- 14: tie layer
- 15: first PA layer
- 16: EVOH layer (barrier)
- 17: second PA layer
- 18: tie layer
- 19: PP sealing layer

In the production of the multilayer film 10 according to the present invention, at first a biaxially oriented 3B film (see Fig. 1) is manufactured by coextruding PET, tie, PA, EVOH, PA, tie and PP forming later the sealing layer. After manufacturing the multilayer film 10 in the described manner the PET layer 13 is front printed with ink 12 and the ink printing 12 is then over lacquered with the thermal protective lacquer 11.

A second multilayer film 20 manufactured according to the present invention shows in Fig. 2 the following layer configuration:
- 21: thermal protective lacquer layer
- 22: ink printing
- 23a: SiOₓ barrier layer, vacuum deposited onto PET layer 23
- 23: PET layer
- 24: tie layer
- 25: PP layer
- 26: tie layer
- 27: PA layer
- 28: tie layer
- 29: PP layer

In the production of the multilayer film 20 according to the present invention, at first a biaxially oriented 3B film (see Fig. 2) is manufactured by coextruding PET, tie, PP, tie, PA, tie and PP forming later the sealing layer. After manufacturing the multilayer film 20 in the described manner the PET layer 23 is provided with SiOₓ barrier layer 23a by vacuum deposition, optionally covered with a primer, and thereafter front printed with ink 22 and the ink printing 22 is over lacquered with the thermal protective lacquer 21.

A third multilayer film 30 manufactured according to the present invention shows in Fig. 3 the following layer configuration:
- 31: biaxially oriented PET film
- 31a: SiOₓ barrier layer, vacuum deposited on PET film 31
- 32: ink printing
- 32a: two-component adhesive
- 33: PP layer
- 34: PP layer
- 35: tie layer
- 36: PA layer
- 37: tie layer
- 38: PP layer
- 39: PP layer

In the production of the multilayer film 30 according to the present invention, at first a biaxially oriented 3B film (see Fig. 3) is manufactured by coextruding PP, PP, tie, PA, tie, PP and PP forming later the sealing layer, and a biaxially oriented PET film 31 is provided with SiOₓ barrier layer 31a by vacuum deposition and thereafter reverse printed with ink 32. In a next step, the PET film 31 provided with barrier layer 31a and ink printing 32 is bonded to the 3B film via adhesive 32a.

A fourth multilayer film 40 manufactured according to the present invention shows in Fig. 4 the following layer configuration:
- 41: biaxially oriented PET film
- 42: ink printing
- 42a: two-component adhesive
- 43: PP layer
- 44: PP layer
- 45: tie layer
- 46: EVOH layer (barrier)
- 47: tie layer
- 48: PP layer
- 49: PP layer

In the production of the multilayer film 40 according to the present invention, at first a biaxially oriented 3B film (see Fig. 4) is manufactured by coextruding PP, PP, tie, EVOH, tie, PP and PP forming later the sealing layer, and a biaxially oriented PET film 41 is reverse printed with ink 42. In a next step, the PET film 41 provided with ink printing 42 is bonded to the 3B film via adhesive 42a.

## Claims

1. Multilayer film for the production of flexible packaging intended for undergoing preservation treatment, with a biaxially oriented plastic layer as outer layer and a sealable layer as inner layer, and optionally at least one middle layer,
**characterized in that**
the outer layer, the inner layer and, if present, the middle layer/s are coextruded to form a biaxially oriented 3B film and the multilayer film has a maximum degree of shrinking of 2% at most when exposed to retort or pasteurization conditions.

2. Multilayer film for the production of flexible retort packaging, with a biaxially oriented plastic layer as outer layer, a sealable layer as inner layer and at least one middle layer,
**characterized in that**
the inner layer and the middle layer/s are coextruded to form a biaxially oriented 3B film, and a biaxially oriented plastic film is adhesively bonded to the 3B film, and the multilayer film has a maximum degree of shrinking of 2% at most when exposed to retort or pasteurization conditions.

3. Multilayer film according to claim 1 or 2,
**characterized by** a maximum degree of shrinking of 2% at most, preferably 1% at most, when exposed to a temperature of up to 140 °C at a relative humidity of 100% for a period of at least 10 minutes.

4. Multilayer film according to claim 1 or 2,
**characterized by** a maximum degree of shrinking of 2% at most, preferably 1% at most, when exposed to a temperature of up to 100 °C at a relative humidity of 100% for a period of at least 30 minutes.

5. Multilayer film according to claim 1, **characterized in that** the 3B film has one of the following layer constructions:
PET : t : PA : EVOH : PA : t : sealing layer
PET : t : PP : t : PA : t: sealing layer
where t is a tie layer

6. Multilayer film according to claim 2, **characterized in that** the 3B film has one of the following layer constructions:
PP : PP : t : PA : t :PP : sealing layer
PP : PP : t : EVOH : t :PP : sealing layer
PE : PE : t : PA : t :PE : sealing layer
PE : PE : t : EVOH : t :PE : sealing layer
where t is a tie layer

7. Multilayer film according to claim 5 or 6,
**characterized in that** the tie layer is a material on the basis of maleic acid anhydride (MAH), acrylate or carbonic acid.

8. Multilayer film according to one of claims 1 to 7,
**characterized in that** the sealing layer is a material selected from the group consisting of polyolefines (PO), particularly polyethylene (PE) or polypropylene (PP), polyamide (PA), polyesters and copolymers thereof, as well as ionomeres (ION), ethylene vinylacetate copolymer (EVA), ethylene butyl acrylate (EBA), ethylene methyl acrylate (EMA), and blends of the aforementioned materials.

9. Multilayer film according to claim 1, **characterized in that** the 3B film is printed and/or covered with a thermal protective lacquer.

10. Multilayer film according to claim 1, **characterized in that** the 3B film is metallised, preferably with aluminium or stainless steel.

11. Multilayer film according to claim 1, **characterized in that** the 3B film is coated with a ceramic material, preferable with silicon oxide or aluminium oxide.

12. Multilayer film according to claim 1, **characterized in that** the 3B film is coated with an organic layer.

13. Multilayer film according to claim 2, **characterized in that** the biaxially oriented plastic film is printed.

14. Multilayer film according to claim 2, **characterized in that** the biaxially oriented plastic film is metallised, preferably with aluminium or stainless steel.

15. Multilayer film according to claim 2, **characterized in that** the biaxially oriented plastic film is coated with a ceramic material, preferable with silicon oxide or aluminium oxide.

16. Multilayer film according to claim 2, **characterized in that** the biaxially oriented plastic film is coated with an organic layer.

17. Use of a multilayer film according to one of the preceding claims for the production of flexible retort packaging for pet food, convenience food, medicinal nutrient solutions, enteral nutrition, fish, liquids and fruit juices.

18. Use of a multilayer film according to claim 17 for the production of stand up pouches, flat pouches or film lids.

19. Process for manufacturing a multilayer film for the production of flexible retort packaging, with a biaxially oriented plastic film as outer layer and a sealable layer as inner layer, and optionally at least one middle layer,
**characterized in that**
the outer layer, the inner layer and, if present, the middle layer/s are coextruded to form a biaxially oriented triple bubble (3B) film, and time and temperature in the third bubble are selected to achieve a maximum degree of shrinking of the 3B film of 2% at most when the multilayer film is exposed to retort or pasteurization conditions.

20. Process for manufacturing a multilayer film for the production of flexible retort packaging, with a biaxially oriented plastic film as outer layer and a sealable layer as inner layer, and at least one middle layer,
**characterized in that**
the inner layer and the middle layer/s are coextruded to form a biaxially oriented triple bubble (3B) film, and time and temperature in the third bubble are selected to achieve a maximum degree of shrinking of the 3B film of 2% at most when exposed to retort or pasteurization conditions, and a biaxially oriented plastic film is adhesively bonded to the 3B film.

21. Process according to claim 19 or 20, **characterized by** a maximum degree of shrinking of the corresponding multilayer film of 2% at most, preferably 1% at most, when exposed to a temperature of up to 140 °C at a relative humidity of 100% for a period of at least 10 minutes.

22. Process according to claim 19 or 20, **characterized by** a maximum degree of shrinking of the corresponding multilayer film of 2% at most, preferably 1% at most, when exposed to a temperature of up to 100 °C at a relative humidity of 100% for a period of at least 30 minutes.

23. Process according to claim 19, **characterized in that** the 3B film is printed and/or covered with a thermal protective lacquer.

24. Process according to claim 19, **characterized in that** the 3B film is metallised, preferably with aluminium or stainless steel.

25. Process according to claims 19, **characterized in that** the 3B film is coated with a ceramic material, preferable with silicon oxide or aluminium oxide.

26. Process according to claims 19, **characterized in that** the 3B film is coated with an organic layer.

27. Process according to claim 20, **characterized in that** the biaxially oriented plastic film is printed.

28. Process according to claim 20, **characterized in that** the biaxially oriented plastic film is metallised, preferably with aluminium or stainless steel.

29. Process according to claim 20, **characterized in that** the biaxially oriented plastic film is coated with a ceramic material, preferable with silicon oxide or aluminium oxide.

30. Process according to claim 20, **characterized in that** the biaxially oriented plastic film is coated with an organic layer.
